# EUROPÄISCHE PATENTSCHRIFT

(11) **EP 3 824 770 B1**
(45) Veröffentlichungstag und Bekanntmachung des Hinweises auf die Patenterteilung: **03.05.2023**
(21) Anmeldenummer: 19210543.5
(22) Anmeldetag: 21.11.2019
(51) Int. Cl.: G01F 11/24, A47J 42/42, A47J 47/01, A47G 19/34

(54) **GEWÜRZABGABEVORRICHTUNG FÜR EIN WÜRZEN VON SPEISEN**
SPICE DISPENSING DEVICE FOR SEASONING FOOD
DISTRIBUTEUR D'ÉPICES POUR UN ASSAISONNEMENT DES ALIMENTS

(43) Veröffentlichungstag der Anmeldung: 26.05.2021
(73) Patentinhaber: Vorwerk & Co. Interholding GmbH, 42270 Wuppertal (DE)
(72) Erfinder: Fischer, Matthias, 45529 Hattingen (DE); Frielinghaus, Robert, 44803 Bochum (DE)
(74) Vertreter: Gille Hrabal Partnerschaftsgesellschaft mbB Patentanwälte

(56) Entgegenhaltungen:
- GB-A- 2 467 917
- US-A- 2 047 184
- US-A1- 2014 305 970
- US-A1- 2016 018 250
- Anonymous: "Latent Epicure Salz und Pfeffermühle (2er Set) - Batteriebetrieben | Leuchtendes Licht | Einstellbare Feinheit | inkl. GRATIS Ständer: Amazon.de: Küche & Haushalt", , 12. Januar 2017 (2017-01-12), XP055684433, Gefunden im Internet: URL:https://www.amazon.de/Latent-Epicure-S alz-Pfeffermühle-Batteriebetrieben/dp/B01A 39TKLW?ref_=s9_apbd_otopr_hd_bw_bscLF&pf_r d_r=NQN1SV1YYKD6WBFMDP6H&pf_rd_p=14700c5f- 18d7-5c35-b8b1-7a6ca1d17fe0&pf_rd_s=mercha ndised-search-10&pf_rd_t=BROWSE&pf_rd_i=13 017101&th=1 [gefunden am 2020-04-08]

## Beschreibung

Die Erfindung betrifft eine Gewürzabgabevorrichtung für ein Würzen von Speisen. Mit einer Gewürzabgabevorrichtung im Sinne der vorliegenden Erfindung können Gewürze dosiert abgegeben werden.

Speisen werden durch die Verarbeitung von Zutaten zubereitet. Für die Zubereitung von Speisen können Speisenzubereitungsapparate wie zum Beispiel die Küchenmaschine Thermomix^{®} eingesetzt werden. Die Küchenmaschine Thermomix^{®} kann Zutaten für eine Speise in einem zugehörigen Speisenzubereitungsgefäß wiegen, erhitzen, mischen und/oder zerkleinern. Die Zubereitung einer Speise kann mit der Küchenmaschine Thermomix^{®} gemäß Rezeptschritten eines Rezepts Schritt für Schritt halbautomatisiert durchgeführt werden.

Da Zutaten, die in das Speisenzubereitungsgefäß gebracht werden, gewogen werden können, können fehlerhafte Dosierungen leicht vermieden werden. Dies gilt aber nicht für Gewürze, da die benötigten Mengen zu gering sind, um mit hinreichender Genauigkeit durch die üblicherweise vorgesehene Waage einer Küchenmaschine gewogen werden zu können.

Um Gewürze während einer Zubereitung einer Speise hinzuzufügen, können handgeführte Gewürzmühlen eingesetzt werden, die durch Drehen eines Mahlwerks Gewürze abgeben können. Das Drehen des Mahlwerks einer Gewürzmühle kann mithilfe eines Elektromotors geschehen. Bei solchen elektrischen Gewürzmühlen kann ein Taster durch den Benutzer betätigt werden. Solange der Taster betätigt wird, dreht sich das Mahlwerk mithilfe des Elektromotors, und es wird das entsprechende Gewürz wie zum Beispiel Pfeffer abgegeben. Die Dosierung des so abgegebenen Gewürzes hängt also davon ab, wie lange der Taster betätigt wird. Die Dosierung erfolgt folglich manuell.

Aus der Druckschrift US 2016/0374486 A1 ist eine automatisierte Vorrichtung zur Zubereitung einer Speise mit einem Gewürzausgabemechanismus bekannt. Es ist eine austauschbare Kartusche vorgesehen, die ein Gewürz enthält. In die Kartusche ist ein Abgabemechanismus eingebaut, um eine vorbestimmte Volumendosis zu isolieren und diese in Richtung einer Öffnung im Boden der Kartusche zu bewegen. Die Patrone ist so bemessen und geformt, dass diese in die automatische Speisenzubereitungsvorrichtung eingesetzt werden kann.

Aus der Druckschrift EP 3358516 A1 ist eine Vorrichtung mit einem Vorratsbehälter für Gewürze und einem Aromaspeicher bekannt. Mithilfe von Pumpen werden Gewürz und Aroma abgegeben.

Aus den Druckschriften US 2016/0286837 A1 und US 2016/0219906 A1 sind Verfahren für ein automatisiertes Kochen nach Rezepten bekannt.

Aus der Druckschrift US 2 047 184 A ist eine Gewürzabgabevorrichtung bekannt, die eine Menge an Gewürz mithilfe einer horizontal gelagerten, drehbaren Trommel dosieren kann. Eine durch die Trommel dosierte Menge an Gewürz gelangt von der Trommel in einen schubladenartigen Behälter der Gewürzabgabevorrichtung hinein.

Die Druckschrift GB 2 467 917 A offenbart eine Abgabevorrichtung für Nahrungsmittel mit einer Dosiereinrichtung. Von der Dosiereinrichtung gelangt ein Nahrungsmittel in ein Mahlwerk hinein. So dosiertes und gemahlenes Nahrungsmittel wird in eine Schublade weitergeleitet.

Aus der Druckschrift US 2016/018250 ist eine Aufbewahrungs- und Abgabevorrichtung für Lebensmittel bekannt. Über einen Abgabemechanismus kann aus einer Kammer das in der Kammer befindliche Lebensmittel in eine Schüssel gebracht werden. Die Schüssel ist auf eine Waage abgestellt, wodurch das Gewicht des in die Schüssel gebrachten Lebensmittels gemessen werden kann.

Die Druckschrift US 2014/305970 A1 offenbart eine Anordnung für Schüttgüter wie Zucker und Mehl. Schüttgüter werden in einem Behälter gelagert und über eine Riemenscheibe in eine Dosierschublade hineingebracht.

Aufgabe der Erfindung ist die Schaffung einer Gewürzabgabevorrichtung für ein Würzen von Speisen, durch welche fehlerhafte Dosierungen vermieden werden können.

Die Aufgabe der Erfindung wird durch eine Gewürzabgabevorrichtung mit den Merkmalen des Patentanspruchs 1 gelöst. Vorteilhafte Ausgestaltungen ergeben sich aus den abhängigen Ansprüchen.

Die Aufgabe der Erfindung wird gelöst durch eine Gewürzabgabevorrichtung für ein Würzen von Speisen. Die Gewürzabgabevorrichtung umfasst Gewürzbehälter und Dosiereinrichtungen. Eine Dosiereinrichtung kann aus einem Gewürzbehälter Gewürz dosiert entnehmen. Die Gewürzabgabevorrichtung umfasst zumindest eine Transporteinrichtung. Die Transporteinrichtung kann durch Dosiereinrichtungen dosiertes Gewürz in eine abnehmbare, handgeführte Sammelkammer transportieren. Für ein Würzen einer Speise muss die Sammelkammer von der Gewürzabgabevorrichtung abgenommen und mit der Hand geführt werden.

Der Gewürzbehälter ist ein Behälter, der dafür bestimmt und geeignet ist, ein Gewürz zu lagern. Beispiele für ein solches Gewürz sind Pfeffer, Salz oder Zucker. Das Gewürz kann in Form eines Pulvers vorliegen. Das Gewürz kann in Form von Körnern oder anders geformten Stücken vorliegen. Es können auch Küchenkräuter in dem Gewürzbehälter für ein Würzen einer Speise gelagert werden oder gelagert sein. Der Gewürzbehälter ist grundsätzlich verschlossen und weist beispielsweise an seiner Oberseite einen Deckel für eine Öffnung auf, durch die hindurch der Gewürzbehälter mit Gewürzen gefüllt werden kann.

Die Dosiereinrichtung ist eine Einrichtung, die dazu bestimmt und geeignet ist, eine vorbestimmte Menge an Gewürz aus dem Gewürzbehälter zu entnehmen, ohne dafür manuell dosieren zu müssen. Durch die Dosiereinrichtung soll es möglich sein, dass ein Benutzer auch ohne Fachwissen in gelungener Weise ein Gericht würzen kann.

Durch die Transporteinrichtung gelangt Gewürz, welches durch die Dosiereinrichtung dosiert wurde, in die handgeführte Sammelkammer hinein.

Mit "handgeführte Sammelkammer" ist gemeint, dass die Sammelkammer dazu bestimmt und geeignet ist, in einer Hand gehalten und mit einer Hand geführt zu werden, um eine Speise zu würzen. Es handelt sich also nicht um eine Kammer, die bereits aufgrund ihrer Größe und ihres Gewichts nicht geeignet ist, um diese für ein Würzen einer Speise mit einer Hand zu führen. Eine Pfanne oder ein Kochtopf üblicher Größe sind beispielsweise zu groß und zu schwer, um eine handgeführte Sammelkammer im Sinne der vorliegenden Erfindung sein zu können.

Die Gewürzabgabevorrichtung umfasst eine Mehrzahl von Gewürzbehältern. In jedem Gewürzbehälter kann ein Gewürz gelagert sein. Ein Gewürz in einem Gewürzbehälter unterscheidet sich dann von einem Gewürz in einem anderen Gewürzbehälter. Mithilfe der Gewürzabgabevorrichtung können dann unterschiedliche Gewürze dosiert und in die Sammelkammer gebracht werden. Sind sämtliche vorgesehenen Gewürze dosiert in die Sammelkammer gebracht worden, so kann anschließend die Sammelkammer von der übrigen Gewürzabgabevorrichtung abgenommen werden, um eine Speise mit besonders geringem Zeitaufwand zu würzen.

Für jeden Gewürzbehälter ist eine eigene Dosiereinrichtung vorhanden. Es werden so vorteilhaft Verunreinigungen von Gewürzen vermieden, die ein Gelingen einer Speise stören könnten.

Ein Gewürzbehälter umfasst ein Mahlwerk als Dosiereinrichtung. Ein anderer Gewürzbehälter umfasst eine andere Dosiereinrichtung, die für die Dosierung eines Pulvers eingerichtet ist.

Eine handgeführte Sammelkammer im Sinne der vorliegenden Erfindung weist aus Gewichtsgründen vorzugsweise ausschließlich dünne Wände mit einer Wandstärke von nicht mehr als 2 mm, vorzugsweise von nicht mehr als 1 mm auf. Eine Wandstärke von bis zu 0,5 mm kann genügen. Die Wände der Sammelkammer bestehen vorzugsweise aus Kunststoff, damit die Sammelkammer leicht ist und damit problemlos mit einer Hand gehalten und geführt werden kann. Die Sammelkammer kann aber auch aus einem metallischen Blech gefertigt sein.

Das Volumen der handgeführten Sammelkammer ist im Vergleich zum Volumen von einem üblichen Kochtopf bzw. Kochgefäß klein, da in der Sammelkammer lediglich Gewürze gesammelt werden sollen, um damit eine Speise zu würzen. Das Fassungsvermögen der Sammelkammer ist daher in der Regel kleiner als 300 ml, vorzugsweise kleiner als 200 ml. Ein Fassungsvermögen von bis zu 100 ml kann genügen.

Die Sammelkammer ist abnehmbar. Ein Benutzer kann also die Sammelkammer von der übrigen Gewürzabgabevorrichtung lösen und ihren Inhalt einer Speise hinzufügen, umso eine Speise zu würzen. Dies ist mit dem Vorteil verbunden, dass die Gewürzabgabevorrichtung nicht einer von der Speise kommenden Feuchtigkeit ausgesetzt wird.

Durch die Gewürzabgabevorrichtung können Fehler bei der Zubereitung einer Speise vermieden, die auf fehlerhaft dosierten Gewürzen beruhen. Das fehlerfreie Gelingen einer Speise wird so vor allem für ungeübte Benutzer vereinfacht. Ein Fachwissen über das Würzen von Speisen ist aufgrund der Erfindung nicht erforderlich. Eine präzise Dosierung von Kleinstmengen kann realisiert werden.

In einer Ausgestaltung der Erfindung umfassen die Dosiereinrichtung und die Transporteinrichtung gemeinsam eine drehbar gelagerte Walze. Die drehbar gelagerte Walze kann zumindest eine Mulde in ihrer Oberfläche aufweisen. Die drehbar gelagerte Walze kann vorzugsweise um eine horizontal verlaufende Achse gedreht werden, wenn die Gewürzabgabevorrichtung bestimmungsgemäß aufgestellt ist. Dadurch kann die Dosiereinrichtung besonders einfach und zuverlässig realisiert werden.

Die Mulde ist vorzugsweise langgestreckt. Die langgestreckte Mulde verläuft vorzugsweise parallel zur Achse oder Welle, um die die Walze gedreht werden kann. Die Mulde kann alternativ beispielsweise in Form einer Wendel um die Achse bzw. Welle herum verlaufen.

Die Oberfläche der Walze kann so an eine untere Öffnung des Gewürzbehälters angrenzen, dass sich die Mulde unmittelbar unterhalb der unteren Öffnung des Gewürzbehälters befinden kann, um die Dosiereinrichtung besonders einfach und zuverlässig zu realisieren. Die Oberfläche der Walze kann in den Boden des Gewürzbehälters hineinreichen, die die Öffnung aufweist. Die Oberfläche der Walze kann an ihrer Oberseite sich auf gleicher Höhe wie der Boden befinden.

Eine Öffnung der Sammelkammer kann sich unterhalb der Walze so befinden, dass Gewürz aus der Mulde in die Sammelkammer fallen kann. Hierdurch wird der technische Aufwand für die Transporteinrichtung minimiert.

Mulden können über den Umfang der Oberfläche gleichmäßig verteilt sein, um schnell und dennoch präzise dosieren zu können.

Ein Boden eines Gewürzbehälters kann an die Mantelfläche der Walze dicht angrenzen. Der Boden wirkt dann als Abstreifer für Gewürz. Es gelingt so eine besonders präzise Dosierung mit einem geringen technischen Aufwand.

Um mithilfe einer Walze mit ein oder mehreren Mulden präzise zu dosieren, wird die Walze in zuvor definierter Weise gedreht. Dies geschieht beispielsweise besonders präzise mit einem Schrittmotor.

Ein Gewürzbehälter kann mit einer Dosiermechanik der Dosiereinrichtung fest verbunden sein. Die Dosiermechanik und der Gewürzbehälter können dann eine bauliche Einheit bilden, die vorzugsweise ohne Verwendung von Werkzeug ausgetauscht werden kann.

Die bauliche Einheit umfasst in einer Ausgestaltung keinen elektrischen Antrieb für die Dosiermechanik. Dies gilt insbesondere für Gewürzbehälter, die kein Mahlwerk aufweisen. Ein elektrischer Antrieb für die Dosiermechanik ist dann vorzugsweise fester Bestandteil der übrigen Gewürzabgabevorrichtung. Mit übriger Gewürzabgabevorrichtung ist das Hauptgerät ohne die Sammelkammer und ohne einen Gewürzbehälter gemeint. Die Dosiermechanik kann die genannte Walze mit Mulden umfassen.

Ein abnehmbarer Gewürzbehälter kann eine Lagerung für eine Welle umfassen. Die Walze mit den Mulden und ein Zahnrad können mit der Welle drehfest verbunden sein. Wird der Gewürzbehälter bestimmungsgemäß beispielsweise in eine Aussparung der Gewürzabgabevorrichtung eingesetzt, dann kann das Zahnrad in ein anderes Zahnrad eingreifen. Das andere Zahnrad kann durch einen elektrischen Antrieb angetrieben werden, um dadurch die Walze zu drehen. Durch Drehung der Walze kann Gewürz aus dem Gewürzbehälter über die Walze in die Sammelkammer bewegt werden.

Die Motoransteuerung kann mit einem zusätzlichen "Rüttelschritt" ausgestattet sein, um die jeweilige Mulde sicher zu entleeren: Wenn sich beispielsweise eine zu entleerende Mulde über der Sammelkammer befindet, ruckelt der Antrieb einige Male vor und zurück.

Es kann also allgemein eine Rütteleinrichtung für zumindest eine Komponente der Dosiereinrichtung vorhanden sein. Es kann eine Steuerung für den Antrieb einer Dosiereinheit vorhanden sein, die den Antrieb so steuern kann, dass eine Komponente der Dosiereinrichtung gerüttelt werden kann. Durch Rütteln kann sichergestellt werden, dass Gewürz aus einem Gewürzbehälter in die Dosiereinrichtung hinein bewegt wird und/oder die Dosiereinrichtung vollständig verlässt.

Die Dosiermechanik kann ein Mahlwerk umfassen, mit der beispielsweise in dem Gewürzbehälter gelagerte Pfefferkörner oder eine in der Gewürzbehälter gelagerte Muskatnuss zerkleinert werden können. Durch das Mahlwerk kann ein Gewürz dosiert aus der Gewürzbehälter entnommen werden und zwar beispielsweise durch Steuern der Mahldauer mittels einer elektronischen Steuereinheit. Das Mahlwerk kann so eingerichtet sein, dass der Mahlgrad durch die Steuereinheit eingestellt werden kann. Es kann also dann beispielsweise eingestellt werden, ob ein Pfefferkorn durch Mahlen grob oder fein zerkleinert wird. Das Mahlwerk kann so eingerichtet sein, dass die Mahlgeschwindigkeit durch eine Steuereinheit eingestellt werden kann. Es wird dann also die Drehgeschwindigkeit des Mahlwerks eingestellt. Als Mahlwerk können handelsübliche Mahlwerke für Gewürzmühlen dienen.

Umfasst die Dosiermechanik ein Mahlwerk, dann wird praktischerweise über eine Zeitsteuerung dosiert. Alternativ kann das Gewürz nach dem Mahlen beispielsweise über eine Walze mit Mulden oder auf andere Weise dosiert werden.

Beispielsweise an der Unterseite eines Gewürzbehälters kann der Feinheitsgrad eines zugehörigen Mahlwerks verstellt werden. Es kann sich beispielsweise um ein konventionelles Kegelmahlwerk handeln, welches an der Unterseite eines Gewürzbehälters verstellt werden kann. In einer Ausgestaltung kann eine Verstellung beispielsweis elektronisch gemessen werden, um dann beispielsweise in einer für eine Dosierung vorgesehenen Zeitsteuerung berücksichtigt zu werden. Hierfür bietet sich insbesondere eine kapazitive Abstandsmessung an. Grundsätzlich kann der Mahlgrad über eine entsprechende Aktorik auch automatisch eingestellt werden.

Umfasst ein abnehmbarer Gewürzbehälter ein Mahlwerk, dann umfasst dieser Gewürzbehälter vorzugsweise auch einen elektrischen Antrieb für das Mahlwerk, eine Energieversorgung für den elektrischen Antrieb und eine Betätigungseinrichtung für den elektrischen Antrieb. Dieser Gewürzbehälter kann dann vorteilhaft separat für ein Würzen unter Verwendung des elektrischen Antriebs verwendet werden und zwar durch Betätigen der Betätigungseinrichtung. Die Betätigungseinrichtung kann einen Taster umfassen, der für ein Mahlen gedrückt werden muss.

Als Energieversorgung können eine wiederaufladbare Batterie und/oder ein oder mehrere Kondensatoren vorgesehen sein. Da ein solcher Gewürzbehälter mit Mahlwerk in der Regel nicht getrennt von der Gewürzabgabevorrichtung eingesetzt wird, kann eine Batterie relativ klein dimensioniert sein. Die Batterie kann daher so dimensioniert sein, dass mit dieser nicht länger als 15 Minuten, vorzugsweise nicht länger als 10 Minuten, besonders bevorzugt nicht länger als 5 Minuten, das Mahlwerk für ein Mahlen eines Gewürzes betrieben werden kann. Vorzugsweise ist die Gewürzabgabevorrichtung so beschaffen und eingerichtet, dass die Batterie aufgeladen wird oder werden kann, wenn der Gewürzbehälter mit dem Mahlwerk in die übrige Gewürzabgabevorrichtung eingesetzt ist.

Um durch ein Einsetzen die Batterie und/ oder die ein oder mehreren Kondensatoren aufladen zu können, gibt es eine dafür geeignete Schnittstelle wie zum Beispiel eine USB - Schnittstelle. Der Gewürzbehälter mit dem Mahlwerk kann dann beispielsweise eine USB - Buchse umfassen. Bei der übrigen Gewürzabgabevorrichtung ist dann ein dazu passender USB - Stecker vorgesehen. Über eine solche USB Schnittstelle kann dann auch das Mahlen für ein automatisiertes Dosieren gesteuert werden. Die USB - Schnittstelle wird dann nicht nur für ein Aufladen genutzt.

Eine Ladeelektronik kann fester Bestandteil des Gewürzbehälters mit dem Mahlwerk sein. Eine Ladeelektronik kann aber auch fester Bestandteil des Hauptgeräts sein, also der Teil der Gewürzabgabevorrichtung, der nicht zwingend die ein oder mehreren Gewürzbehälter sowie die Sammelkammer umfassen muss.

Anstelle einer USB-Schnittstelle kann eine induktive Ladeeinrichtung vorgesehen sein. Eine Kommunikation kann dann über einen RFID-Chip erfolgen. Es kann sich dabei um einen RFID-Chip handeln, der auch zur Gewürzerkennung eingesetzt wird, um einer Steuereinrichtung den Inhalt des Gewürzbehälters bekannt zu machen.

Für ein Aufladen kann eine proprietäre technische Lösung vorhanden sein, die zwei Ladekontakte umfassen kann. Anstelle von komplexen standardisierten Protokollen kann eine rudimentäre Kommunikation (Motor an/aus) über die beiden Ladekontakte erfolgen, wenn automatisiert dosiert werden soll.

Umfasst ein abnehmbarer Gewürzbehälter ein Mahlwerk, dann kann ein Handantrieb für das Mahlwerk wie bei einer klassischen Pfeffermühle vorhanden sein. In diesem Fall muss der abnehmbare Gewürzbehälter keinen elektrischen Antrieb umfassen, um den Gewürzbehälter auch unabhängig von der übrigen Gewürzabgabevorrichtung für ein Würzen verwenden zu können.

In einer Ausgestaltung sind auch andere abnehmbare Gewürzbehälter so beschaffen, dass mit diesen auch dann gewürzt werden kann, wenn diese von der übrigen Gewürzabgabevorrichtung abgenommen worden sind. In einer besonders einfachen Ausgestaltung umfassen andere abnehmbare Gewürzbehälter dann beispielsweise einen Deckel, um den jeweiligen Gewürzbehälter an der Oberseite öffnen zu können. Unterhalb des Deckels kann ein Sieb vorgesehen sein, welches dazu dient, manuell pulverförmiges Gewürz dosieren zu können. Das Sieb kann ebenfalls abnehmbar sein, um beispielsweise mithilfe eines Löffels Gewürz dosiert entnehmen zu können.

Ein oder mehrere Aussparungen können an einer Oberseite der Gewürzabgabevorrichtung für ein Einsetzen von Gewürzbehältern vorhanden sein. Eine Deckplatte kann diese Oberseite bilden. Vorzugsweise genügt ein Anheben, um eine Gewürzabgabevorrichtung aus seiner Aussparung zu entfernen und damit die Gewürzabgabevorrichtung abzunehmen. Ein leerer Gewürzbehälter kann so besonders schnell und einfach gegen einen mit Gewürz gefüllten Gewürzbehälter ausgetauscht werden. Durch eine Aussparung kann sichergestellt werden, dass ein Gewürzbehälter schnell und einfach betriebsbereit mit der übrigen Gewürzabgabevorrichtung verbunden werden kann. Eine Aussparung kann ein oder mehrere geneigte Seitenwände wie bei Trichterwänden umfassen, die ein Einsetzen eines Gewürzbehälters erleichtern. In eine Aussparung kann in einer Ausgestaltung auch mehr als ein Gewürzbehälter eingesetzt sein. Eine Aussparung kann aber auch so dimensioniert sein, dass immer nur ein Gewürzbehälter eingesetzt werden kann.

Sind mehrere Aussparungen vorhanden, dann gibt es vorzugsweise für jede Aussparung eine andere Form und einen jeweils daran angepassten Gewürzbehälter. Dadurch kann ein vertauschtes Einsetzen von Gewürzbehältern vermieden werden und damit ein fehlerhaftes Würzen.

Ein Gewürzbehälter kann nach oben frei abstehen. Der Gewürzbehälter kann dann für ein Austauschen leicht ergriffen werden. Insbesondere bei dieser Ausgestaltung besteht der Gewürzbehälter zumindest zum Teil aus einem transparenten Kunststoff oder aus Glas. Durch das freie Abstehen kann dann jederzeit der Füllstand optisch leicht sichtbar sein. Gewürzengpässe können so vermieden werden.

Ein oder mehrere elektrische Antriebe können für die ein oder mehreren Dosiereinrichtungen vorhanden sein. Eine jede Dosiereinheit kann dann elektrisch betrieben werden. Dadurch kann automatisiert dosiert werden, ohne dass ein Eingreifen durch einen Benutzer zwingend erforderlich wäre. Beispielsweise durch ein schaltbares Getriebe kann mit einem Antrieb eine Vielzahl an Dosiermechaniken angetrieben werden.

Die Sammelkammer kann durch zumindest einen Magneten mit der übrigen Gewürzabgabevorrichtung verbunden sein. Die Sammelkammer kann also magnetisch an der übrigen Gewürzabgabevorrichtung gehalten sein, um die Sammelkammer leicht abnehmen zu können.

Die Sammelkammer kann nach oben offen sein. Die Sammelkammer kann dann von oben und damit leicht mit Gewürzen befüllt werden. Ist die Sammelkammer mit der übrigen Gewürzabgabevorrichtung verbunden, dann ist die obere Öffnung der Sammelkammer vorzugsweise durch die übrige Gewürzabgabevorrichtung abgedeckt, so dass die Sammelkammer dann vor Verunreinigungen geschützt ist.

In einer Ausgestaltung kann die Sammelkammer wie eine Schublade horizontal aus der übrigen Gewürzabgabevorrichtung herausgezogen werden. Eine Sammelkammer kann so auf technisch einfache Weise mit der übrigen Gewürzabgabevorrichtung zuverlässig verbunden werden und kann dennoch leicht abgenommen werden.

Es kann eine elektronische Steuereinrichtung vorhanden sein. Der elektronischen Steuereinrichtung kann der Inhalt und/oder der Füllstand eines jeden Gewürzbehälters bekannt sein.

Ein Gewürzbehälter kann codiert sein. Der Code kann eine Information über das Gewürz enthalten, welches sich im Gewürzbehälter befindet. Mithilfe der Steuereinrichtung kann dann der Code gelesen werden. Automatisiert kann eine elektronische Steuereinrichtung dadurch eine Information über den Inhalt eines Gewürzbehälters erhalten.

Gewürzbehälter können wie folgt codiert sein:
- Mechanisch: Die Gewürzbehälter lassen sich nur an ihren angestammten Platz einsetzen, beispielsweise über eine Pin-Codierung. In einer internen Datenbank der Gewürzabgabevorrichtung ist dann die Zuordnung Behälter-Gewürzinhalt hinterlegt.
- RFID 1: Die Gewürzbehälter sind mit einem RFID-Code bestückt und lassen sich so eindeutig identifizieren. In der Gewürzabgabevorrichtung befindet sich eine entsprechende Ausleseeinheit. Die Zuordnung erfolgt wiederum über eine interne Datenbank.
- RFID 2: RFID-Chips benennen das enthaltene Gewürz. Wenn sich der Benutzer entschließt, einen bestimmten Behälter mit einem anderen Gewürz zu befüllen, tauscht er den RFID-Chip. Ein geeigneter RFID - Chip kann Bestandteil eines Gewürznachfüllpacks sein. Alternativ kann die Gewürzabgabevorrichtung eine Vielzahl an RFID-Chips umfassen, die für unterschiedliche Gewürze vorgesehen sind. Ein Benutzer kann sich aus diesen bereitgestellten RFID - Chips dann jeweils den geeigneten RFID Chip aussuchen.
- Optisch 1/2: analog zu RFID 1/2, jedoch wird anstelle des RFID-Chips ein optischer Tag wie etwa ein QR- oder Barcode verwendet.
- Optisch 3: An einer geeigneten Stelle befinden sich eine (Infrarot-)Lichtquelle und ein entsprechendes Spektrometer, das das Spektrum der Gewürze in den verschiedenen Behältern messen kann. Über den spektralen Fingerabdruck können die Gewürze eindeutig bestimmt werden.
- Kombination: Die o.g. Methoden lassen sich kombinieren.

Die Gewürzbehälter können außerdem mit einer Füllstandsüberwachung ausgestattet sein. Es gibt mehrere Möglichkeiten zur automatisierten Ermittlung eines Füllstands.
- Gravimetrisch: Der einzelne Gewürzbehälter wird gewogen bzw. ist mit einer integrierten Waage ausgestattet.
- Optisch: Der Füllstand wird über eine Absorptionsmessung bestimmt.
- Elektrisch: Der Füllstand wird über eine Kapazitätsänderung oder Induktivitätsänderung gemessen.
- Passiv: Ein Motorstrom für Dosiereinrichtungen wird gemessen. Dieser nimmt ab, sobald ein Gewürz leer ist und der mechanische Widerstand durch das Gewürz nicht mehr gegeben ist.
- Historisch: Insbesondere, wenn die Gewürzentnahme nur über die Dosiereinrichtungen erfolgt, kann der Füllstand über die insgesamt entnommene Gewürzmenge, ausgehend von einem vollen Behälter, geschätzt werden.
- Kombination: Die o.g. Methoden lassen sich kombinieren.

Die Gewürzabgabevorrichtung kann einen elektronischen Speicher umfassen. In einem solchen elektronischen Speicher können ein oder mehrere Datenverarbeitungsprogramme elektronisch gespeichert sein. Ein Betriebssystem für die Gewürzabgabevorrichtung kann in dem elektronischen Speicher gespeichert sein.

Es kann eine Signaleinrichtung vorhanden sein, mit der ein Zustand der Gewürzabgabevorrichtung signalisiert werden kann. Die Signaleinrichtung kann eine optische Signaleinrichtung und/oder eine akustische Signaleinrichtung sein. Um optisch zu signalisieren zu können, kann die Gewürzabgabevorrichtung einen Bildschirm umfassen und/oder ein oder mehrere Leuchtmittel. Die ein oder mehreren Leuchtmittel können vorzugsweise in verschiedenen Farben leuchten. Eine Lichtfarbe eines Leuchtmittels kann vorzugsweise durch die Steuereinheit eingestellt werden. Ein Zustand, der durch die Signaleinrichtung signalisiert werden kann, kann ein Füllstand eines Gewürzbehälters sein. Ein Zustand, der durch die Signaleinrichtung signalisiert werden kann, kann ein Betriebszustand sein. Die Signaleinrichtung kann dazu genutzt werden, um zu signalisieren, dass nun eine Speise gewürzt werden muss. Das Signal kann durch ein Küchengerät ausgelöst worden sein.

Die Gewürzabgabevorrichtung kann eine drahtlose Schnittstelle umfassen, um beispielsweise Daten von einem Küchengerät empfangen zu können. Die drahtlose Schnittstelle kann ergänzend oder alternativ vorhanden sein, um Daten versenden zu können, beispielsweise an ein anderes Küchengerät oder beispielsweise für die Durchführung eines Nachkaufs von Gewürzen. Ein drahtloses Senden und/oder Empfangen von Daten kann beispielsweise über Bluetooth oder Wifi erfolgen.

Die Gewürzabgabevorrichtung kann zumindest eine Betätigungseinrichtung umfassen. Durch Betätigung der Betätigungseinrichtung kann die Betätigungseinrichtung beispielsweise veranlasst werden, ein Gewürz zu dosieren und in die Sammelkammer zu transportieren. Sind mehrere Gewürzbehälter vorhanden, so kann die Betätigungseinrichtung dazu genutzt werden, um einen Gewürzbehälter und damit ein Gewürz auszuwählen, welches abgegeben werden soll. Die Betätigungseinrichtung kann beispielsweise einen Taster umfassen, der für ein Dosieren durch Drücken betätigt werden kann. Die Betätigungseinrichtung kann einen Schalter umfassen.

Da das Hauptgerät der Gewürzabgabevorrichtung für einen stationären Betrieb vorgesehen ist, umfasst die Gewürzabgabevorrichtung vorzugsweise ein Kabel mit einem Stecker, der mit einer externen Stromquelle verbunden werden kann. Die Gewürzabgabevorrichtung wird dann also mit elektrischem Strom aus einer externen Energiequelle betrieben. Die Gewürzabgabevorrichtung kann alternativ oder ergänzend eine in der Gewürzabgabevorrichtung vorgesehene Batterie umfassen, um elektrische Energie für den Betrieb zur Verfügung stellen zu können. Die Batterie kann wiederaufladbar sein.

Im Gewürzbehälter ist vorzugsweise ein Trockengewürz gelagert wie zum Beispiel Pfefferkörner, gemahlener Pfeffer, Salz, Zucker, Muskatnuss oder getrocknete Kräuter. In einem Gewürzbehälter kann eine Gewürzmischung gelagert sein, so zum Beispiel eine homogene Mischung aus Salz und gemahlenen Kräutern oder Currypulver. Möglich ist aber auch eine flüssige Gewürzmischung. Die Anzahl an Gewürzen (fein oder gemahlen) kann nach praktischen Gesichtspunkten ausgesucht werden wie verfügbarer Bauraum oder alltäglich genutzte Gewürze.

Die Entnahme einer vorbestimmten Menge bzw. einer vorbestimmten Dosis durch die Dosiereinrichtung wird vorzugsweise automatisiert durchgeführt und kann beispielsweise durch ein anderes Küchengerät gesteuert werden. Durch die automatisierte Dosierung wird eine manuelle Einstellung einer Gewürzmenge vermieden. Dass eine automatisierte Dosierung möglich ist, schließt nicht aus, dass auch manuell eine gewünschte Dosierung eingestellt werden kann, die bewirkt, dass die Dosiereinrichtung die eingestellte Menge aus einem ausgewählten Gewürzbehälter entnimmt und in die Sammelkammer transportiert. Eine automatisierte Dosierung meint, dass ein Benutzer die Menge an Gewürz, die auf einer automatisierten Dosierung beruht, nicht beeinflussen kann. Dem steht nicht entgegen, dass es in einer Ausführungsform der Erfindung erforderlich sein kann, dass erst dann automatisiert dosiert wird, wenn diese durch einen Benutzer aktiviert wird, so zum Beispiel durch Betätigung eines Schalters oder eines Tasters.

Um automatisiert dosieren zu können, können ein oder mehrere Antriebe vorgesehen sein.

Es können beispielsweise unter einer Deckplatte ein oder mehrere Antriebe vorhanden sein. Beispielsweise über Zahnräder können mechanische Komponenten von Dosiereinrichtungen durch ein oder mehrere Antriebe angetrieben werden. Die ein oder mehreren Antriebe können elektrische Schrittmotoren sein, um besonders präzise dosieren zu können.

Es können Elektromotoren mit mindestens 30° Winkelauflösung als Antriebe vorgesehen sein, um präzise dosieren zu können. Es können unkonventionelle Antriebe wie Spulen/Pleuelstangen-Systeme vorhanden sein.

In einer Ausgestaltung der Erfindung gibt es ein Datenverarbeitungsprogramm und eine Benutzeroberfläche für die Gewürzabgabevorrichtung, damit ein Benutzer mithilfe der Benutzeroberfläche die Gewürzabgabevorrichtung individuell steuern kann. Mithilfe der Benutzeroberfläche kann in einer Ausgestaltung beispielsweise ein Gewürz dosiert werden. Die Benutzeroberfläche ist dann also so gestaltet, dass ein Benutzer eine gewünschte Dosierung einstellen kann. Durch diese Ausgestaltung ist es möglich, dass ein Benutzer auch nach eigenen geschmacklichen Vorlieben würzen kann. Ein Benutzer muss also nicht im Rahmen der Zubereitung einer Speise von der automatisierten Dosierung eines Gewürzes Gebrauch machen. Er kann stattdessen zu gegebener Zeit mithilfe der Benutzeroberfläche individuell würzen. Das Datenverarbeitungsprogramm kann in einer Ausgestaltung für eine Installation auf einem Mobilfunkgerät vorgesehen sein. Es kann aber auch dafür vorgesehen sein, dass dieses auf einem Speisenzubereitungsapparat installiert wird oder aber bereits in der Gewürzabgabevorrichtung installiert ist. Ein individuelles Anpassen von Speisen an geschmackliche Vorlieben mit geringstem Aufwand und mit höchster Ergebnisqualität wird dadurch möglich. Das Datenverarbeitungsprogramm kann Teil eines Betriebssystems eines Speisenzubereitungsapparats oder der Gewürzabgabevorrichtung sein.

Die gesamte Ansteuerung erfolgt in einer Ausgestaltung über die Steuereinrichtung. Diese kann ggf. Schritt- und Mahlwerksmotoren steuern, kann ggf. eine Abstandsmessung von Mahlwerken ausmessen und kann ggf. eine Kommunikation mit einem übergeordneten Kochgerät durchführen.

Eine Dosiereinrichtung kann eine Dosierschnecke umfassen, welche ein Gewürz durch Drehung durch einen Kanal weiterbewegt. Über die Steuerung der Zeit wird dann dosiert.

Eine Dosiereinrichtung kann eine Vertiefung aufweisen, in welches Gewürz aus dem Gewürzbehälter fallen kann. Die Dosiereinrichtung kann einen Abstreifer umfassen, mit dem überschüssiges Gewürz durch Abstreichen entfernt kann. Wird die Vertiefung entleert, so wird dadurch dosiert.

Für ein Dosieren kann in einer Ausgestaltung das Volumen des Gewürzes im Fall gemessen werden, zum Beispiel durch Messung der Dichte mithilfe eines Lasers und einer Photodiode der Dosiereinrichtung unter Berücksichtigung der Zeit.

Im Falle der Walze können Mulden schräg zur Achse angeordnet sein, um so ein kontinuierliches Dosieren zu ermöglichen (Mischform aus Walze und Dosierschnecke).

Es kann auch gravimetrisch dosiert werden, also über eine Gewichtsmessung. Entweder kann dabei die Sammelkammer gewogen werden oder der Gewürzbehälter (der leichter wird je mehr Gewürz dosiert wird). Die Dosiereinrichtung umfasst dann eine entsprechend empfindliche Waage.

Über ein zeitgesteuertes Öffnen eines Gewürzbehälters kann auch dosiert werden, allerdings mit einer relativ geringen Präzision.

Die hier genannten technischen Lösungen, um Dosieren zu können, können für Pulver und für Gewürze genutzt werden, die gemahlen werden müssen. Im Falle von Gewürzen, die gemahlen werden müssen, kann zunächst eine unbestimmte Menge gemahlen werden. Das gemahlene Gewürz kann dann mit einer der genannten technischen Lösungen dosiert werden.

In einer Ausgestaltung umfasst die Gewürzabgabevorrichtung mehr Gewürzbehälter als in das Hauptgerät eingesetzt werden können. In jedem Gewürzbehälter kann dann ein anderes Gewürz gelagert sein. Es können in Abhängigkeit von einem Rezept die dafür benötigten Gewürzbehälter mit den entsprechenden darin befindlichen Gewürzen eingesetzt werden. Eingesetzte Gewürzbehälter nebst Gewürzen sind also je nach Rezept auszutauschen. Durch eine elektronische Erkennung des gerade eingesetzten Gewürzes kann dies für einen Benutzer recht einfach gemacht werden.

Wenn die Anzahl an Gewürzen deutlich erhöht wird und die Größe der Schublade nicht mehr praktikabel ist, bietet es sich ggf. an, die Gewürze anders anzuordnen. Der Transport in die Schublade erfolgt dann z.B. mit einem Förderband, durch Fallen durch einen schrägen Kanal mit oder ohne Rütteleinrichtung, durch eine Bewegung der Gewürzbehälter, durch eine Bewegung der Sammelkammer oder durch Absaugung zur Sammelkammer hin.

Das Hauptgerät kann als Gewürzregal, als Gewürzkarussell oder als flacher Kasten gestaltet sein, der auch in eine Schublade passen würde.

Die Gewürzabgabevorrichtung kann für ein Aufstellen auf einer Arbeitsfläche eingerichtet sein.

Die Gewürzabgabevorrichtung kann für eine Befestigung an einer Wand eingerichtet sein. Die Sammelkammer kann in diesem Fall von unten per Magnet befestigt werden, um das Abnehmen zu erleichtern.

Nachfolgend wird die Erfindung anhand von Figuren näher erläutert. Der Schutzbereich der Ansprüche ist nicht auf die Beispiele und die Figuren eingeschränkt.

Es zeigen:
- Figur 1:: Gewürzabgabevorrichtung;
- Figur 2:: Walze für eine Dosiereinrichtung;
- Figur 3:: Schnittdarstellung eines Ausschnitts der Gewürzabgabevorrichtung;
- Figur 4:: Schnittdarstellung durch Gewürzabgabevorrichtung;
- Figur 5:: Schnittdarstellung durch Walze mit angrenzendem Gewürzbehälterboden.

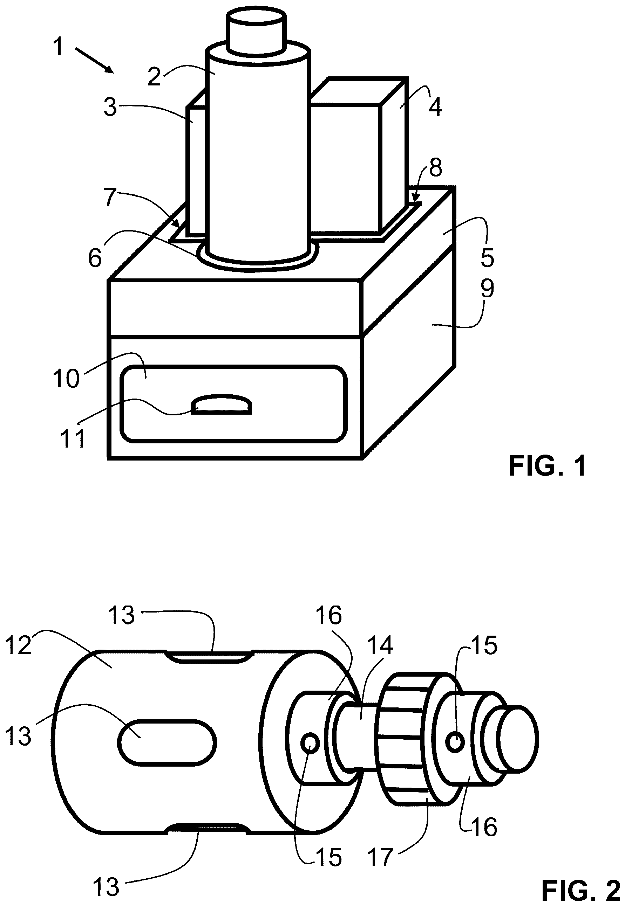

Die Figur 1 zeigt eine Gewürzabgabevorrichtung 1 für ein Würzen von Speisen mit drei Gewürzbehältern 2, 3 und 4. Es gibt eine Deckplatte 5 mit Aussparungen 6, 7 und 8. Die Gewürzbehälter 2, 3 und 4 sind in die Aussparungen 6, 7 und 8 eingesetzt. Der Gewürzbehälter 2 kann eine Gewürzmühle mit einem Mahlwerk sein. In dem Gewürzbehälter 2 befinden sich dann beispielsweise Pfefferkörner. Der Gewürzbehälter 2 kann wie gezeigt einen kreisförmigen Durchmesser aufweisen und ist in die Ausnehmung 6 eingesetzt. Die Ausnehmung 6 kann derart kreisförmig sein, dass in diese Ausnehmung 6 nur der Gewürzbehälter 2 eingesetzt werden kann, nicht aber die beiden anderen Gewürzbehälter 3 und 4. Die Gewürzbehälter 3 und 4 können wie gezeigt einen rechteckigen Durchmesser aufweisen und sind in die Ausnehmungen 7 und 8 eingesetzt. Die Ausnehmungen 7 und 8 können derart rechteckig sein, dass in diese Ausnehmungen 7 und 8 nur die Gewürzbehälter 3 und 4 eingesetzt werden können, nicht aber die der Gewürzbehälter 2. Die Rechteckformen können sich ebenfalls so unterscheiden, dass der Gewürzbehälter 3 nur in die Ausnehmung 7 eingesetzt werden kann und der Gewürzbehälter 4 nur in die Ausnehmung 8. Die Gewürzbehälter 3 und 4 sind beispielsweise für die Lagerung von Pulver förmigem Gewürz vorgesehen.

Die Deckplatte 5 ist auf einem Grundkasten 9 befestigt. In den Grundkasten 9 ist eine Sammelkammer 10 horizontal hineingeschoben und zwar in der Art einer Schublade. Die Sammelkammer 10 verfügt über einen Griff 11. Wird der Griff 11 ergriffen, so kann die Sammelkammer 10 aus dem Grundkasten 9 herausgezogen und so für ein Würzen abgenommen werden.

Die Figur 2 zeigt eine Walze 12 einer Dosiereinrichtung. Der Mantel, also die zylinderförmige Oberfläche, der Walze 12 weist Mulden 13 auf. Die Mulden 13 sind vorzugsweise gleichmäßig über den Umfang der Walze herum verteilt. Die Mulden 13 können wie gezeigt länglich sein und parallel zur Welle 14 verlaufen. Das Volumen einer jeden Mulde 13 kann einer üblichen Prise eines Gewürzes entsprechen. Die Walze 12 ist mit der Welle 14 drehfest verbunden. Durch die Welle 14 kann die Walze 12 drehbar gelagert werden. Die Welle 14 kann durch die Walze 12 hindurchgeschoben und mit einer Schraube 15 fixiert sein. Die Schraube 15 kann für eine Befestigung durch eine Hülse 16 geschraubt sein. Die Hülse 16 ist dann einer Stirnseite der Walze 12 befestigt.

An einer Seite der Welle 14 ist ein Antriebsrad 17, so zum Beispiel ein Zahnrad, befestigt. Das Antriebsrad 16 kann mit der Welle 14 dauerhaft drehfest verbunden sein. Das Antriebsrad 16 kann mittels einer Schraube 15 an der Welle 14 lösbar befestigt sein. Die Schraube 15 kann für eine Befestigung durch eine Hülse 16 geschraubt sein. Die Hülse 16 ist dann einer Stirnseite des Antriebrads 17 befestigt.

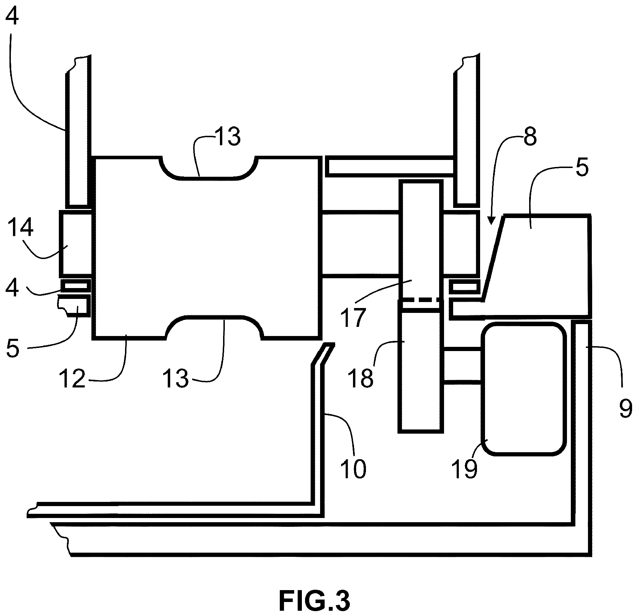

Die Figur 3 zeigt einen Ausschnitt der Gewürzabgabevorrichtung und zwar als Schnittdarstellung. Dargestellt ist der Bereich mit dem Gewürzbehälter 4. Die Figur 3 verdeutlicht, dass die seitliche Wand der Aussparung 8 wie bei einem Trichter geneigt verläuft, um ein Einsetzen des Gewürzbehälters 4 zu erleichtern. Die Welle 14 wird durch den Gewürzbehälter 4 drehbar gelagert und ist mit diesem dauerhaft verbunden. Die Walze 12 befindet sich am Grund des Gewürzbehälters 4. Das Antriebsrad 17 kann durch ein Antriebsrad 18 angetrieben werden. Das Antriebsrad 18 kann durch einen Elektromotor 19 angetrieben werden. Der Elektromotor 19 kann ein Schrittmotor sein.

Befindet sich ein pulverförmiges Gewürz im Gewürzbehälter 4, so gelangt dieses auch in die oben liegende Mulde 13 hinein. Wird die Walze 14 durch den Elektromotor 19 angetrieben und folglich gedreht, so gelangt die mit Gewürz gefüllte Mulde 13 zur Unterseite. Von hier aus fällt das Gewürz aus der Mulde 13 in die Sammelkammer 10 hinein. Die Walze 14 ist damit zugleich eine Transporteinrichtung, durch die Gewürz in die Sammelkammer 10 hinein transportiert wird.

Das Antriebsrad 17 und das Antriebsrad 18 können Zahnräder sein. Ein Verbinden der beiden Antriebsräder 17 und 18 durch Einsetzen des Gewürzbehälters 4 in die Aussparung 8 ist dann besonders einfach möglich.

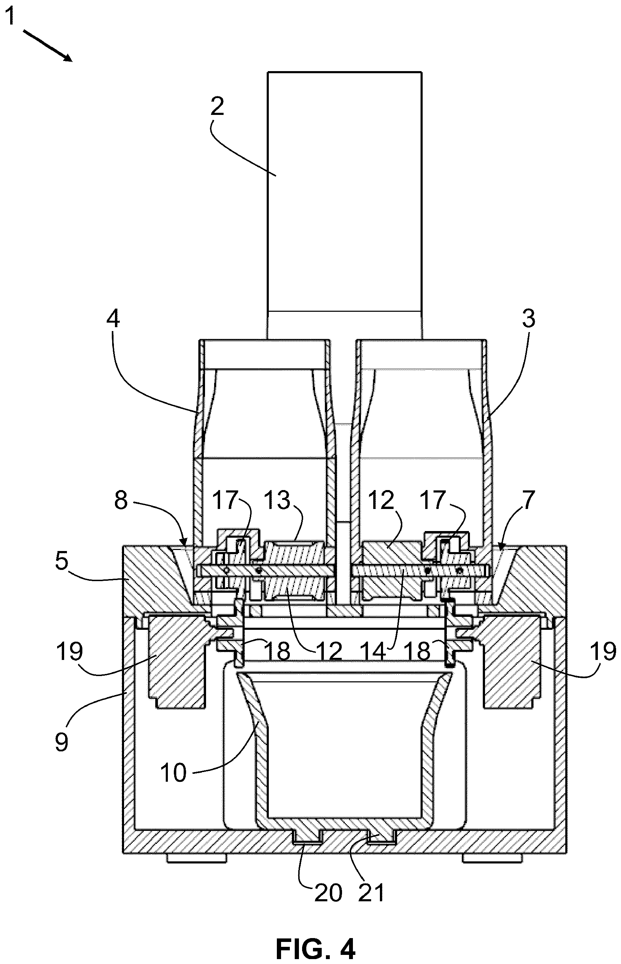

Befindet sich neben dem Gewürzbehälter 4 ein Gewürzbehälter 3, wie dies in der Figur 1 gezeigt wird, so können die Dosiereinrichtungen für die Gewürzbehälter 3 und 4 spiegelverkehrt zueinander angeordnet sein, wie dies in der Figur 4 in einer Schnittdarstellung gezeigt wird.

Die Sammelkammer 10 kann wie in der Figur 4 gezeigt an der Unterseite ein oder mehrere Kufen 21 umfassen, die durch Schienen 20 geführt werden. Die Sammelkammer 10 kann durch andere Führungsmittel geführt sein, um einen störungsfreien Betrieb sicherzustellen.

Die Sammelkammer 10 kann so dimensioniert sein, dass aus allen vorgesehenen Gewürzbehältern 2, 3, 4 Gewürz in die Sammelkammer 10 hineinfallen kann. Ist dies aufgrund einer großen Vielzahl von Gewürzbehältern unpraktisch, so können beispielsweise ein oder mehrere elektrisch antreibbare Transportbänder vorgesehen sein, auf die Gewürze aus Dosiereinrichtungen fallen können. Die ein oder mehreren elektrisch antreibbaren Transportbänder können dann das Gewürz in die Sammelkammer hinein transportieren.

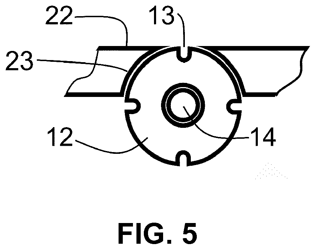

Die Figur 5 ist eine Schnittdarstellung durch eine Walze 12 mit Mulden 13 und daran angrenzendem Boden 22 eines Gewürzbehälters 3 oder 4. Der Boden 22 grenzt an die Mantelfläche der Walze 12 dicht an, so dass der Boden 22 als Abstreifer wirkt, wenn die Walze 12 gedreht wird. Hierdurch wird verbessert sichergestellt, dass ein exakt definiertes Volumen an Gewürz zur Sammelkammer 10 transportiert werden kann. Die Fläche 23 des Bodens 22, die an die Walze 12 unmittelbar angrenzt, ist wie in der Figur 5 gezeigt konkav gerundet und damit an die zylindrische Form der Mantelfläche der Walze 12 angepasst. Dadurch wirkt der Boden 22 weiter verbessert als Abstreifer. Vorzugsweise steht die Walze 12 nicht oder zumindest nur geringfügig nach oben gegenüber dem Boden 22 hervor, wie dies in der Figur 5 gezeigt wird. Auch dadurch wird verbessert sichergestellt, dass präzise dosiert werden kann. Vorzugsweise steht der Boden 22 nicht oder zumindest nur geringfügig nach oben gegenüber der Walze 12 hervor, wie dies in der Figur 5 gezeigt wird. Auch dadurch wird verbessert sichergestellt, dass präzise dosiert werden kann. Die Oberfläche der Walze 12 kann in den Boden 22 des Gewürzbehälters hineinreichen, wie dies in der Figur 5 gezeigt wird. Die Oberfläche der Walze kann an ihrer Oberseite sich auf gleicher Höhe wie die Oberseite des Bodens 22 befinden, wie dies in der Figur 5 gezeigt wird.

Die Figur 5 zeigt ein Beispiel mit vier Mulden 13, die über den Umfang der Walze 12 gleichmäßig verteilt sind. Bei vier Mulden kann das Problem bestehen, dass eine unkontrollierte Menge an Gewürz aus Mulden herausfällt, wenn sich die Mulden in der 3:00 Uhr Stellung oder 9:00 Uhr Stellung befinden und die Walze 12 nicht weiter gedreht wird. Dieses Problem kann vermieden werden, wenn die Mulden 13 auch dann abdeckt sind, wenn diese sich in der 3:00 Uhr Stellung bzw. 9:00 Uhr Stellung befinden. Als Abdeckung kann beispielsweise der Boden 22 dienen, der dann entsprechend dicker ist. Alternativ oder ergänzend können aber auch beispielsweise nur zwei oder drei Mulden 13 um den Umfang der Walze 12 herum gleichmäßig verteilt sein, um zu vermeiden, dass sich eine Mulde in der ungünstigen 3:00 Uhr Stellung bzw. 9:00 Uhr Stellung befindet, wenn sich eine weitere Mulde 13 wie in der Figur 5 gezeigt an der Oberseite für ein Füllen und / oder an der Unterseite für ein vollständiges Entleeren befindet.

## Patentansprüche

1. Gewürzabgabevorrichtung (1) für ein Würzen von Speisen mit einer Mehrzahl von Gewürzbehältern (2, 3, 4), mit einer Mehrzahl von Dosiereinrichtungen (12), wobei eine jede Dosiereinrichtung aus einem Gewürzbehälter (2, 3, 4) Gewürz dosiert entnehmen kann, mit zumindest einer Transporteinrichtung, wobei die Gewürzabgabevorrichtung ferner eine abnehmbare, handgeführte Sammelkammer (10) beinhaltet und die Transporteinrichtung durch die Dosiereinrichtungen (12) dosiertes Gewürz in die Sammelkammer (10) transportiert, wobei die Sammelkammer (10) für ein Würzen einer Speise von der Gewürzabgabevorrichtung (1) abgenommen und mit der Hand geführt werden muss, **dadurch gekennzeichnet, dass** ein Gewürzbehälter (2, 3, 4) ein Mahlwerk als Dosiereinrichtung (12) umfasst und ein anderer Gewürzbehälter (2, 3, 4) eine andere Dosiereinrichtung (12), die für die Dosierung eines Pulvers eingerichtet ist.

2. Gewürzabgabevorrichtung (1) nach einem der vorhergehenden Ansprüche, **dadurch gekennzeichnet, dass** die Dosiereinrichtung und die Transporteinrichtung gemeinsam eine drehbar gelagerte Walze (12) umfassen, die zumindest eine Mulde (13) in ihrer Oberfläche aufweist.

3. Gewürzabgabevorrichtung (1) nach dem vorhergehenden Anspruch, **dadurch gekennzeichnet, dass** die Oberfläche der Walze (12) so an eine untere Öffnung des Gewürzbehälters (2, 3, 4) angrenzt, dass sich die Mulde (13) unmittelbar unterhalb der unteren Öffnung befinden kann.

4. Gewürzabgabevorrichtung (1) nach einem der beiden vorhergehenden Ansprüche, **dadurch gekennzeichnet, dass** sich eine Öffnung der Sammelkammer (10) unterhalb der Walze (12) so befindet, dass Gewürz aus der Mulde (13) in die Sammelkammer (10) fallen kann.

5. Gewürzabgabevorrichtung (1) nach einem der drei vorhergehenden Ansprüche, **dadurch gekennzeichnet, dass** Mulden (13) über den Umfang der Oberfläche der Walze (12) gleichmäßig verteilt sind.

6. Gewürzabgabevorrichtung (1) nach einem der vorhergehenden Ansprüche, **dadurch gekennzeichnet, dass** ein oder mehrere Aussparungen an einer Oberseite der Gewürzabgabevorrichtung (1) für ein Einsetzen von Gewürzbehältern (2, 3, 4) vorhanden sind.

7. Gewürzabgabevorrichtung (1) nach einem der vorhergehenden Ansprüche, **dadurch gekennzeichnet, dass** ein Gewürzbehälter (2, 3, 4) nach oben frei absteht.

8. Gewürzabgabevorrichtung (1) nach einem der vorhergehenden Ansprüche, **dadurch gekennzeichnet, dass** ein oder mehrere elektrische Antriebe (19) für die ein oder mehreren Dosiereinrichtungen (12) vorhanden sind.

9. Gewürzabgabevorrichtung (1) nach dem vorhergehenden Anspruch, **dadurch gekennzeichnet, dass** eine Steuereinrichtung für die ein oder mehreren elektrischen Antriebe (19) vorhanden ist, die ein oder mehreren elektrischen Antriebe (19) so steuern kann, dass eine Komponente der Dosiereinrichtung (12) gerüttelt werden kann.

10. Gewürzabgabevorrichtung (1) nach einem der vorhergehenden Ansprüche, **dadurch gekennzeichnet, dass** die Sammelkammer (10) horizontal aus der Gewürzabgabevorrichtung (1) herausgezogen werden kann.

11. Gewürzabgabevorrichtung (1) nach einem der vorhergehenden Ansprüche, **dadurch gekennzeichnet, dass** eine elektronische Steuereinrichtung vorhanden ist und der elektronischen Steuereinrichtung der Inhalt eines jeden Gewürzbehälters (2, 3, 4) bekannt ist.

12. Gewürzabgabevorrichtung (1) nach einem der vorhergehenden Ansprüche, **dadurch gekennzeichnet, dass** ein Gewürzbehälter (2) ein Mahlwerk, einen elektrischen Antrieb für das Mahlwerk, eine elektrische Energiequelle für den Antrieb und eine Betätigungseinrichtung für ein Betreiben des elektrischen Antriebs umfasst und dieser Gewürzbehälter abnehmbar ist.

## Claims

1. Spice dispensing device (1) for seasoning food with a plurality of spice containers (2, 3, 4), with a plurality of dosing devices (12), wherein each dosing device can remove spice from a spice container (2, 3, 4) in a dosed manner, with at least one transport device, wherein the spice dispensing device further comprises a removable, hand-guided collection chamber (10) and the transport device transports spice dosed by the dosing devices (12) into the collection chamber (10), wherein the collection chamber (10) must be removed from the spice dispensing device (1) and guided by hand for seasoning a food, **characterized in that** one spice container (2, 3, 4) comprises a grinder as a dosing device (12) and another spice container (2, 3, 4) comprises another dosing device (12) configured for dosing a powder.

2. Spice dispensing device (1) according to one of the preceding claims, **characterized in that** the dosing device and the transport device jointly comprise a rotatably mounted roller (12) having at least one trough (13) in its surface.

3. Spice dispensing device (1) according to one of the preceding claims, **characterized in that** the surface of the roller (12) is adjacent to a lower opening of the spice container (2, 3, 4) in such a way that the trough (13) can be located immediately below the lower opening.

4. Spice dispensing device (1) according to one of the preceding claims, **characterized in that** an opening of the collection chamber (10) is located below the roller (12) such that spice can fall from the trough (13) into the collection chamber (10).

5. Spice dispensing device (1) according to one of the three preceding claims, **characterized in that** troughs (13) are evenly distributed over the circumference of the surface of the roller (12).

6. Spice dispensing device (1) according to one of the preceding claims, **characterized in that** one or more recesses are provided on an upper side of the spice dispensing device (1) for inserting spice containers (2, 3, 4).

7. Spice dispensing device (1) according to one of the preceding claims, **characterized in that** a spice container (2, 3, 4) freely protrudes upwardly.

8. Spice dispensing device (1) according to one of the preceding claims, **characterized in that** one or more electric drives (19) are present for the one or more dosing devices (12).

9. Spice dispensing device (1) according to the preceding claim, **characterized in that** a control device for the one or more electric drives (19) is present which can control the one or more electric drives (19) in such a way that a component of the dosing device (12) can be shaken.

10. Spice dispensing device (1) according to one of the preceding claims, **characterized in that** the collection chamber (10) can be pulled out of the spice dispensing device (1) horizontally.

11. Spice dispensing device (1) according to one of the preceding claims, **characterized in that** an electronic control device is present and the electronic control device is aware of the contents of each spice container (2, 3, 4).

12. Spice dispensing device (1) according to one of the preceding claims, **characterized in that** a spice container (2) comprises a grinder, an electric drive for the grinder, an electric power source for the drive and an actuating device for operating the electric drive, and this spice container is removable.

## Revendications

1. Dispositif de distribution d'épices (1) pour l'assaisonnement d'aliments avec une pluralité de récipients à épices (2, 3, 4), avec une pluralité de dispositifs de dosage (12), dans lequel chacun dispositif de dosage peut prélever de manière dosée de l'épice dans un récipient à épices (2, 3, 4), avec au moins un dispositif de transport, dans lequel le dispositif de distribution d'épices contient en outre une chambre collectrice (10) amovible, guidée à la main, et le dispositif de transport transporte de l'épice dosée par les dispositifs de dosage (12) dans la chambre collectrice (10), dans lequel la chambre collectrice (10), pour l'assaisonnement d'un aliment, doit être retirée du dispositif de distribution d'épices (1) et guidée à la main, **caractérisé en ce qu'**un récipient à épices (2, 3, 4) comprend un broyeur en tant que dispositif de dosage (12) et un autre récipient à épices (2, 3, 4) un autre dispositif de dosage (12), qui est adapté pour le dosage d'une poudre.

2. Dispositif de distribution d'épices (1) selon l'une quelconque des revendications précédentes, **caractérisé en ce que** le dispositif de dosage et le dispositif de transport comprennent ensemble un rouleau (12) monté de manière rotative, qui présente au moins un creux (13) dans sa surface.

3. Dispositif de distribution d'épices (1) selon la revendication précédente, **caractérisé en ce que** la surface du rouleau (12) est adjacente à une ouverture inférieure du réservoir d'épices (2, 3, 4) de telle sorte que le creux (13) peut se trouver directement en dessous de l'ouverture inférieure.

4. Dispositif de distribution d'épices (1) selon l'une des deux revendications précédentes, **caractérisé en ce qu'**une ouverture de la chambre collectrice (10) est située en dessous du rouleau (12) de sorte que les épices peuvent tomber du creux (13) dans la chambre de collecte (10).

5. Dispositif de distribution d'épices (1) selon l'une des trois revendications précédentes, **caractérisé en ce que** des creux (13) sont répartis uniformément sur la circonférence de la surface du rouleau (12).

6. Dispositif de distribution d'épices (1) selon l'une des revendications précédentes, **caractérisé en ce qu'**il existe un ou plusieurs évidements sur une face supérieure du dispositif de distribution d'épices (1) pour une insertion de récipients à épices (2, 3, 4).

7. Dispositif de distribution d'épices (1) selon l'une des revendications précédentes, **caractérisé en ce qu'**un récipient à épices (2, 3, 4) dépassent librement vers le haut.

8. Dispositif de distribution d'épices (1) selon l'une des revendications précédentes, **caractérisé en ce qu'**il existe un ou plusieurs entraînements électriques (19) pour l'un ou les plusieurs dispositifs de dosage (12).

9. Dispositif de distribution d'épices (1) selon la revendication précédente, **caractérisé en ce qu'**il existe un dispositif de commande pour l'un ou les plusieurs entraînements électriques (19), qui peut commander un ou plusieurs entraînements électriques (19) de telle sorte qu'un composant du dispositif de dosage (12) peut être secoué.

10. Dispositif de distribution d'épices (1) selon l'une des revendications précédentes, **caractérisé en ce que** la chambre collectrice (10) peut être ressortie horizontalement du dispositif de distribution d'épices (1).

11. Dispositif de distribution d'épices (1) selon l'une des revendications précédentes, **caractérisé en ce qu'**il existe un dispositif de commande électronique et que le dispositif de commande électronique a connaissance du contenu de chaque réservoir d'épices (2, 3, 4).

12. Dispositif de distribution d'épices (1) selon l'une des revendications précédentes, **caractérisé en ce qu'**un récipient à épices (2) comprend un broyeur, un entraînement électrique pour le broyeur, une source d'énergie électrique pour l'entraînement et un dispositif d'actionnement pour le fonctionnement de l'entraînement électrique, et ce récipient à épices est amovible.
